# EUROPEAN PATENT SPECIFICATION

(11) **EP 3 096 005 B1**
(45) Date of publication and mention of the grant of the patent: **30.12.2020**
(21) Application number: 16170163.6
(22) Date of filing: 18.05.2016
(51) Int. Cl.: F03D 7/02, F03D 7/04, F03D 9/25

(54) **LIMIT FOR DERATING SCHEME USED IN WIND TURBINE CONTROL**
GRENZE FÜR DROSSELUNGSSCHEMA IN DER WINDTURBINENSTEUERUNG
LIMITE DE SCHÉMA DE DÉPRÉCIATION UTILISÉ DANS UNE COMMANDE DE TURBINE ÉOLIENNE

(30) Priority: 20.05.2015 US 201514717132
(43) Date of publication of application: 23.11.2016
(73) Proprietor: General Electric Company, Schenectady, NY 12345 (US)
(72) Inventor: KLODOWSKI, Anthony Michael, Salem, VA Virginia 24153 (US); SMITH, David, Salem, VA Virginia 24153 (US)
(74) Representative: Zimmermann & Partner Patentanwälte mbB

(56) References cited:
- EP-A1- 2 781 738
- WO-A1-2010/069318
- WO-A1-2012/088640
- US-A1- 2010 133 831
- US-A1- 2013 049 363

## Description

The present subject matter relates generally to wind turbines, and more particularly to systems and methods for controlling wind turbine systems.

A wind turbine can include a turbine that has a rotor that includes a rotatable hub assembly having multiple blades. The blades transform wind energy into a mechanical rotational torque that drives one or more generators via the rotor. The generators are sometimes, but not always, rotationally coupled to the rotor through a gearbox. The gearbox steps up the inherently low rotational speed of the rotor for the generator to efficiently convert the rotational mechanical energy to electrical energy, which is fed into a utility grid via at least one electrical connection. Gearless direct drive wind turbines also exist. The rotor, generator, gearbox and other components are typically mounted within a housing, or nacelle, that is positioned on top of a base that may be a truss or tubular tower.

Some wind turbine configurations include double-fed induction generators (DFIGs). Such configurations may also include power converters that are used to convert a frequency of generated electric power to a frequency substantially similar to a utility grid frequency (e.g. 50 Hz, 60 Hz, etc.). Moreover, such converters, in conjunction with the DFIG, also transmit electric power between the utility grid and the generator as well as transmit generator excitation power to a wound generator rotor from one of the connections to the electric utility grid connection. Alternatively, some wind turbine configurations include, but are not limited to, alternative types of induction generators, permanent magnet (PM) synchronous generators and electrically-excited synchronous generators and switched reluctance generators. These alternative configurations may also include power converters that are used to convert the frequencies as described above and transmit electrical power between the utility grid and the generator.

Wind turbines have a plurality of electrical and mechanical components. Each component may have independent or different operating limitations, such as current, voltage, power, and/or temperature limits, than other components. Moreover, known wind turbines typically are designed and/or assembled with components having predefined rated power limits. To operate within such rated power limits, the electrical components may be operated with large margins for the operating limitations. Such operation may result in inefficient wind turbine operation, and a power generation capability of the wind turbine may be underutilized. In addition, use of components with increased ratings can be expensive.

Control schemes to allow more efficient operation of the wind turbine can monitor various environmental conditions, such as temperature, altitude, air density, etc., of the wind turbine system and adjust various operating limits (e.g. using derating curves) based on the operating conditions. For instance, a de-rating scheme can be used to adjust an operating limit for a wind turbine component based on altitude, temperature, and other environmental conditions. In some cases, the de-rating scheme can provide an operating limit that is greater than a maximum operating limit specified by a component manufacturer. See, for example, EP2781738, US2010133831, US2013049363 and WO 2012/088640.

Various aspects and advantages of embodiments of the present disclosure will be set forth in part in the following description, or may be learned from the description, or may be learned through practice of the embodiments.

The present invention is defined by the appended claims.

Variations and modifications can be made to these example aspects of the present disclosure.

Various features, aspects and advantages of various embodiments will become better understood with reference to the following description and appended claims. The accompanying drawings, which are incorporated in and constitute a part of this specification, illustrate embodiments of the present disclosure and, together with the description, serve to explain the related principles.

Detailed discussion of embodiments directed to one of ordinary skill in the art are set forth in the specification, which makes reference to the appended figures, in which:
FIG. 1 depicts a portion of an example wind turbine;
FIG. 2 depicts an example electrical and control system of an example wind turbine;
FIG. 3 depicts an example power limiting control scheme according to example aspects of the present disclosure;
FIG. 4 depicts an example de-rating module according to example embodiments of the present disclosure;
FIG. 5 depicts interpolation of an example de-rating curve according to example embodiments of the present disclosure; and
FIG. 6 depicts a flow diagram of an example control method according to example embodiments of the present disclosure.

Reference now will be made in detail to embodiments of the invention, one or more examples of which are illustrated in the drawings. Each example is provided by way of explanation of the invention, not limitation of the invention. Thus, it is intended that the present invention is defined by the appended claims. Example aspects of the present disclosure are directed to systems and methods for controlling a wind turbine by adjusting operating limits for one or more components (e.g. cables, transformers, limit switches, buses, connectors, etc.) of the wind turbine. According to example aspects of the present disclosure, an operating limit for a component of the wind turbine can be determined based on various environmental conditions (e.g. temperature, altitude, air density, wind speed, etc.) and/or operational conditions (e.g. turbine speed) using a de-rating scheme. The de-rating scheme can adjust the operating limit of the component as a function of the data indicative of environmental conditions. For instance, as temperature decreases, an electrical current operational limit of a wind turbine component, such as a cable (e.g. rotor cable, stator cable, etc.), can be increased to accommodate more current. The wind turbine can be controlled based on the operating limit. For instance, an operating condition of the wind turbine can be controlled so as that operation of the wind turbine does not cause an operational parameter (e.g. an electrical current) to exceed the operating limit determined for the component of the wind turbine.

According to example embodiments of the present disclosure, the operating limit determined using the de-rating scheme can be limited so as not to exceed a rated operating limit for the at least one component as specified, for instance, by the manufacturer of the component. For instance, the de-rating scheme can implement a clamp that caps the operating limit determined using the de-rating scheme to a highest or maximum rated value of the component of the wind turbine specified, for instance, by a manufacturer of a component.

In one example embodiment, implementation of the de-rating scheme can include accessing a de-rating curve. The de-rating curve can specify one or more operating limits as a function of known environmental conditions. Upon receipt of data indicative of current environmental conditions of the wind turbine, the de-rating curve can be interpolated (e.g. using linear interpolation or other suitable interpolation) based on the known data of the de-rating curve to determine an operating limit for the component at the current environmental conditions. In some cases, the de-rating scheme can provide an initial operating limit that is greater than the highest rated value of the component of the wind turbine.

The de-rating scheme can adjust the initial operating limit based at least in part on the rated operating limit of the component of the wind turbine. For instance, in one example, the de-rating scheme adjusts the initial operating limit to an adjusted operating limit that is no greater than the rated operating limit of the component of the wind turbine. In another example, a margin can be provided so that that the adjusted operating limit is no greater than 80% of the rated operating limit, such as no greater than 90% of the rated operating limit, such as no greater than 95% of the rated operating limit, such as not greater than 98% of the rated operating limit, or other percentage of the rated operating limit. In one embodiment, the operating limit can be set to be above the rated operating limit, such as 105% of the rated operating limit, 110% of the rated operating limit, 120% of the rated operating limit, or other suitable operating limit greater than the rated operating limit.

In this way, a technical effect of example embodiments of the present disclosure can include at least implementing de-rating of one or more components of a wind turbine so as not to exceed rated operational limits of the components as specified, for instance, by the manufacture of the components. For instance, implementing a clamp according to example embodiments of the present disclosure during implementation of the de-rating scheme for each of the components of the wind turbine (e.g. each cable, transformer, limit switch, etc.) can provide additional control to ensure that maximum rated operational limits for the components of the wind turbine are not exceeded during control of operating conditions of the wind turbine.

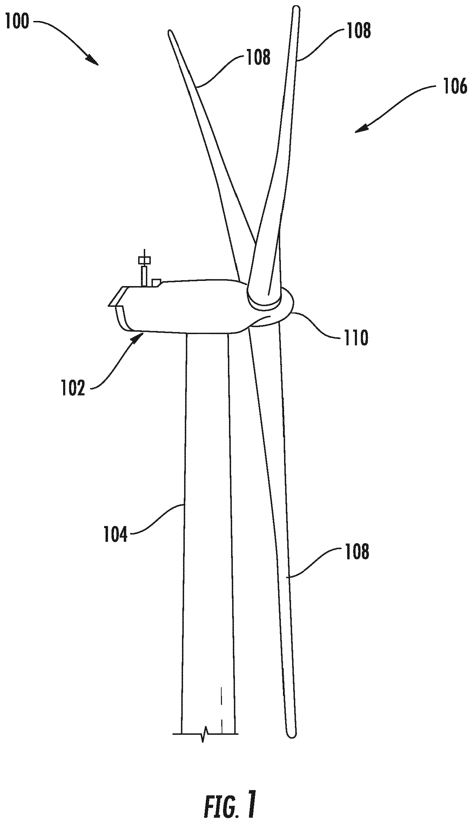

FIG. 1 is a perspective view of a portion of an example wind turbine 100. Wind turbine 100 can include a nacelle 102 housing a generator (not shown in FIG. 1). Nacelle 102 can be mounted on a tower 104 (a portion of tower 104 being shown in FIG. 1). Tower 104 may have any suitable height/altitude (e.g. 75 m, 120 m, etc.) that facilitates operation of wind turbine 100 as described herein. Wind turbine 100 can also include a rotor 106 that includes three blades 108 attached to a rotating hub 110.

Wind turbine 100 can include any number of blades 108 that facilitates operation of wind turbine 100 as described herein. In example embodiments, wind turbine 100 can include a gearbox operatively coupled to rotor 106 and a generator.

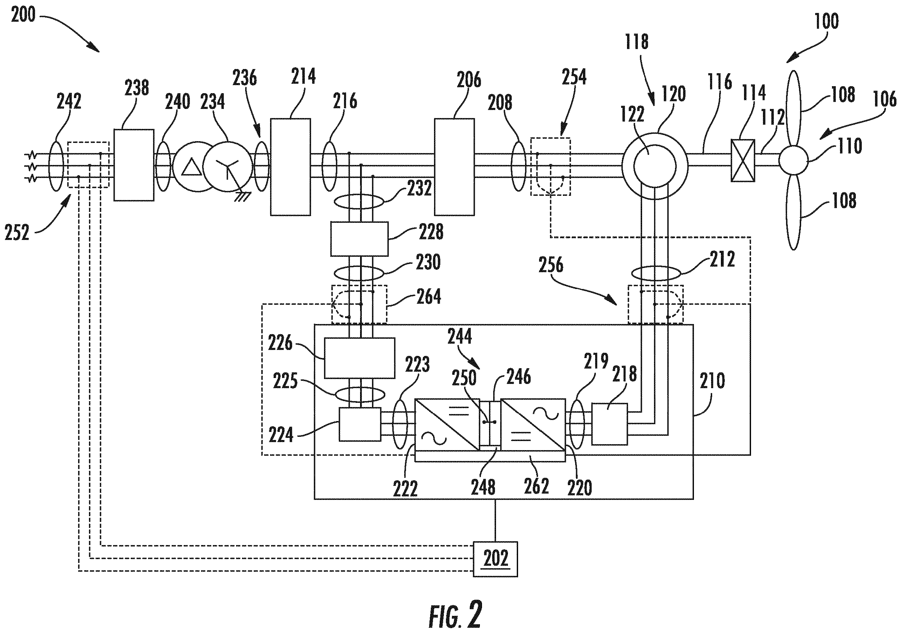

FIG. 2 is a schematic view of an example electrical and control system 200 that may be used with wind turbine 100. Rotor 106 can include blades 108 coupled to hub 110. Rotor 106 can also include a low-speed shaft 112 rotatably coupled to hub 110. Low-speed shaft 112 can be coupled to a step-up gearbox 114 that can be configured to step up the rotational speed of low-speed shaft 112 and transfer that speed to a high-speed shaft 116. In one example embodiment, gearbox 114 can have a step-up ratio of approximately 70:1. For example, low-speed shaft 112 rotating at approximately 20 revolutions per minute (rpm) coupled to gearbox 114 with an approximately 70:1 step-up ratio can generate a speed for high-speed shaft 116 of approximately 1400 rpm. As used herein, the use of the term "about" or "approximately" in conjunction with a stated numerical value refers to within 25% of the stated numerical value. Gearbox 114 can have any suitable step-up ratio that facilitates operation of wind turbine 100 as described herein. In one embodiment, wind turbine 100 can include a direct-drive generator that is rotatably coupled to rotor 106 without any intervening gearbox.

High-speed shaft 116 can be rotatably coupled to generator 118. In one example embodiment, generator 118 can be a wound rotor, three-phase, double-fed induction (asynchronous) generator (DFIG) that includes a generator stator 120 magnetically coupled to a generator rotor 122. In one embodiment, generator rotor 122 can include a plurality of permanent magnets in place of rotor windings.

Electrical and control system 200 can include a turbine controller 202. Turbine controller 202 can include one or more processors and one or more memory devices. The turbine controller 202 can further include, at least one processor input channel and at least one processor output channel. In example embodiments, the turbine controller 202 can include one or more computing devices.

As used herein, the term computing device is not limited to integrated circuits referred to in the art as a computer, but broadly refers to a processor, a microcontroller, a microcomputer, a programmable logic controller (PLC), an application specific integrated circuit, and other programmable circuits, and these terms are used interchangeably herein. In one example embodiment, a memory device can include, but is not limited to, a computer-readable medium, such as a random access memory (RAM). In one embodiment, one or more storage devices, such as a floppy disk, a compact disc read only memory (CD-ROM), a magneto-optical disk (MOD), and/or a digital versatile disc (DVD) can be used. Also, in one example embodiment, additional input channels can be, but are not limited to, computer peripherals associated with an operator interface such as a mouse and a keyboard. Further, in one embodiment, additional output channels may include, but are not limited to, an operator interface monitor.

One or more processors for turbine controller 202 can process information transmitted from a plurality of electrical and electronic devices that may include, but are not limited to, voltage and current transducers. RAM and/or storage devices can store and transfer information and instructions to be executed by the one or more processors. RAM and/or storage devices can also be used to store and provide temporary variables, static (i.e., non-changing) information and instructions, or other intermediate information to the one or more processors during execution of instructions by the one or more processors. Instructions that are executed include, but are not limited to, resident conversion and/or algorithms. The execution of sequences of instructions is not limited to any specific combination of hardware circuitry and software instructions.

Referring to FIG. 2, generator stator 120 can be electrically coupled to a stator synchronizing switch 206 via a stator bus 208. In an example embodiment, to facilitate the DFIG configuration, generator rotor 122 can be electrically coupled to a bi-directional power conversion assembly 210 via a rotor bus 212. In one embodiment, generator rotor 122 can be electrically coupled to rotor bus 212 via any other device that facilitates operation of electrical and control system 200 as described herein. In one embodiment, electrical and control system 200 can be configured as a full power conversion system that includes a full power conversion assembly similar in design and operation to power conversion assembly 210 and electrically coupled to generator stator 120. The full power conversion assembly can facilitate channeling electric power between generator stator 120 and an electric power transmission and distribution grid. In one example embodiment, stator bus 208 can transmit three-phase power from generator stator 120 to stator synchronizing switch 206. Rotor bus 212 can transmit three-phase power from generator rotor 122 to power conversion assembly 210. In one embodiment, stator synchronizing switch 206 can be electrically coupled to a main transformer circuit breaker 214 via a system bus 216. In one embodiment, one or more fuses (not shown) are used instead of main transformer circuit breaker 214. In another embodiment, neither fuses nor main transformer circuit breaker 214 is used.

Power conversion assembly 210 can include a rotor filter 218 that is electrically coupled to generator rotor 122 via rotor bus 212. A rotor filter bus 219 can electrically couple rotor filter 218 to a rotor-side power converter 220, and rotor-side power converter 220 can be electrically coupled to a line-side power converter 222. Rotor-side power converter 220 and line-side power converter 222 can be power converter bridges including power semiconductors. In one embodiment, rotor-side power converter 220 and line-side power converter 222 can be configured in a three-phase, pulse width modulation (PWM) configuration including insulated gate bipolar transistor (IGBT) switching devices. In one embodiment, rotor-side power converter 220 and line-side power converter 222 can have any configuration using any switching devices that facilitate operation of electrical and control system 200 as described herein. Power conversion assembly 210 can be coupled in electronic data communication with turbine controller 202 to control the operation of rotor-side power converter 220 and line-side power converter 222.

In one embodiment, a line-side power converter bus 223 can electrically couple line-side power converter 222 to a line filter 224. A line bus 225 can electrically couple line filter 224 to a line contactor 226. Moreover, line contactor 226 can be electrically coupled to a conversion circuit breaker 228 via a conversion circuit breaker bus 230. In addition, conversion circuit breaker 228 can be electrically coupled to main transformer circuit breaker 214 via system bus 216 and a connection bus 232. In one embodiment, line filter 224 can be electrically coupled to system bus 216 directly via connection bus 232 and can include any suitable protection scheme configured to account for removal of line contactor 226 and conversion circuit breaker 228 from electrical and control system 200. Main transformer circuit breaker 214 can be electrically coupled to an electric power main transformer 234 via a generator-side bus 236. Main transformer 234 can be electrically coupled to a grid circuit breaker 238 via a breaker-side bus 240. Grid circuit breaker 238 can be connected to the electric power transmission and distribution grid via a grid bus 242. In one embodiment, main transformer 234 can be electrically coupled to one or more fuses, rather than to grid circuit breaker 238, via breaker-side bus 240. In one embodiment, neither fuses nor grid circuit breaker 238 is used, but rather main transformer 234 is coupled to the electric power transmission and distribution grid via breaker-side bus 240 and grid bus 242.

In one embodiment, rotor-side power converter 220 can be coupled in electrical communication with line-side power converter 222 via a single direct current (DC) link 244. In one embodiment, rotor-side power converter 220 and line-side power converter 222 can be electrically coupled via individual and separate DC links. DC link 244 can include a positive rail 246, a negative rail 248, and at least one capacitor 250 coupled between positive rail 246 and negative rail 248. In one embodiment, capacitor 250 can include one or more capacitors configured in series and/or in parallel between positive rail 246 and negative rail 248.

Turbine controller 202 can be configured to receive a plurality of voltage and electric current measurement signals from a first set of voltage and electric current sensors 252. Moreover, turbine controller 202 can be configured to monitor and control at least some of the operational variables associated with wind turbine 100. In one embodiment, each of three voltage and electric current sensors 252 are electrically coupled to each one of the three phases of grid bus 242. Alternatively, voltage and electric current sensors 252 are electrically coupled to system bus 216. In one embodiment, voltage and electric current sensors 252 can be electrically coupled to any portion of electrical and control system 200 that facilitates operation of electrical and control system 200 as described herein. In one embodiment, turbine controller 202 can be configured to receive any number of voltage and electric current measurement signals from any number of voltage and electric current sensors 252 including, but not limited to, one voltage and electric current measurement signal from one transducer.

In one embodiment, electrical and control system 200 can also include a converter controller 262 that is configured to receive a plurality of voltage and electric current measurement signals. For example, in one embodiment, converter controller 262 can receive voltage and electric current measurement signals from a second set of voltage and electric current sensors 254 coupled in electronic data communication with stator bus 208. Converter controller 262 can receive a third set of voltage and electric current measurement signals from a third set of voltage and electric current sensors 256 coupled in electronic data communication with rotor bus 212. Converter controller 262 can also receive a fourth set of voltage and electric current measurement signals from a fourth set of voltage and electric current sensors 264 coupled in electronic data communication with conversion circuit breaker bus 230. Second set of voltage and electric current sensors 254 can be substantially similar to first set of voltage and electric current sensors 252, and fourth set of voltage and electric current sensors 264 can be substantially similar to third set of voltage and electric current sensors 256. Converter controller 262 can be substantially similar to turbine controller 202 and can be coupled in electronic data communication with turbine controller 202. Moreover, in one embodiment, converter controller 262 can be physically integrated within power conversion assembly 210. In one embodiment, converter controller 262 can have any configuration that facilitates operation of electrical and control system 200 as described herein.

During operation of example embodiments, wind impacts blades 108 and blades 108 transform wind energy into a mechanical rotational torque that rotatably drives low-speed shaft 112 via hub 110. Low-speed shaft 112 drives gearbox 114 that subsequently steps up the low rotational speed of low-speed shaft 112 to drive high-speed shaft 116 at an increased rotational speed. High speed shaft 116 rotatably drives generator rotor 122. A rotating magnetic field is induced by generator rotor 122 and a voltage is induced within generator stator 120 that is magnetically coupled to generator rotor 122. Generator 118 converts the rotational mechanical energy to a sinusoidal, three-phase alternating current (AC) electrical energy signal in generator stator 120. The associated electrical power is transmitted to main transformer 234 via stator bus 208, stator synchronizing switch 206, system bus 216, main transformer circuit breaker 214 and generator-side bus 236. Main transformer 234 steps up the voltage amplitude of the electrical power and the transformed electrical power is further transmitted to a grid via breaker-side bus 240, grid circuit breaker 238 and grid bus 242.

In one embodiment, a second electrical power transmission path is provided. Electrical, three-phase, sinusoidal, AC power is generated within generator rotor 122 and is transmitted to power conversion assembly 210 via rotor bus 212. Within power conversion assembly 210, the electrical power is transmitted to rotor filter 218 and the electrical power is modified for the rate of change of the PWM signals associated with rotor-side power converter 220. Rotor-side power converter 220 acts as a rectifier and rectifies the sinusoidal, three-phase AC power to DC power. The DC power is transmitted into DC link 244. Capacitor 250 facilitates mitigating DC link 244 voltage amplitude variations by facilitating mitigation of a DC ripple associated with AC rectification.

The DC power is subsequently transmitted from DC link 244 to line-side power converter 222 and line-side power converter 222 acts as an inverter configured to convert the DC electrical power from DC link 244 to three-phase, sinusoidal AC electrical power with pre-determined voltages, currents, and frequencies. This conversion is monitored and controlled via converter controller 262. The converted AC power is transmitted from line-side power converter 222 to system bus 216 via line-side power converter bus 223 and line bus 225, line contactor 226, conversion circuit breaker bus 230, conversion circuit breaker 228, and connection bus 232. Line filter 224 compensates or adjusts for harmonic currents in the electric power transmitted from line-side power converter 222. Stator synchronizing switch 206 can be configured to close to facilitate connecting the three-phase power from generator stator 120 with the three-phase power from power conversion assembly 210.

Conversion circuit breaker 228, main transformer circuit breaker 214, and grid circuit breaker 238 can be configured to disconnect corresponding buses, for example, when excessive current flow may damage the components of electrical and control system 200. Additional protection components can also be provided including line contactor 226, which may be controlled to form a disconnect by opening a switch corresponding to each line of line bus 225.

Power conversion assembly 210 can compensate or adjust the frequency of the three-phase power from generator rotor 122 for changes, for example, in the wind speed at hub 110 and blades 108. Therefore, in this manner, mechanical and electrical rotor frequencies are decoupled from stator frequency.

Under some conditions, the bi-directional characteristics of power conversion assembly 210, and specifically, the bi-directional characteristics of rotor-side power converter 220 and line-side power converter 222, can facilitate feeding back at least some of the generated electrical power into generator rotor 122. More specifically, electrical power can transmitted from system bus 216 to connection bus 232 and subsequently through conversion circuit breaker 228 and conversion circuit breaker bus 230 into power conversion assembly 210. Within power conversion assembly 210, the electrical power is transmitted through line contactor 226, line bus 225, and line-side power converter bus 223 into line-side power converter 222. Line-side power converter 222 acts as a rectifier and rectifies the sinusoidal, three-phase AC power to DC power. The DC power is transmitted into DC link 244. Capacitor 250 facilitates mitigating DC link 244 voltage amplitude variations by facilitating mitigation of a DC ripple sometimes associated with three-phase AC rectification.

The DC power is subsequently transmitted from DC link 244 to rotor-side power converter 220 and rotor-side power converter 220 acts as an inverter configured to convert the DC electrical power transmitted from DC link 244 to a three-phase, sinusoidal AC electrical power with pre-determined voltages, currents, and frequencies. This conversion can monitored and controlled via converter controller 262. The converted AC power is transmitted from rotor-side power converter 220 to rotor filter 218 via rotor filter bus 219 and is subsequently transmitted to generator rotor 122 via rotor bus 212, thereby facilitating sub-synchronous operation.

Power conversion assembly 210 can be configured to receive control signals from turbine controller 202. The control signals are based on sensed conditions or operating characteristics of wind turbine 100 and electrical and control system 200. The control signals can be received by turbine controller 202 and can be used to control operation of power conversion assembly 210. Feedback from one or more sensors may be used by electrical and control system 200 to control power conversion assembly 210 via converter controller 262 including, for example, conversion circuit breaker bus 230, stator bus and rotor bus voltages or current feedbacks via second set of voltage and electric current sensors 254, third set of voltage and electric current sensors 256, and fourth set of voltage and electric current sensors 264. Using this feedback information, and for example, switching control signals, stator synchronizing switch control signals and system circuit breaker control (trip) signals may be generated in any known manner.

According to example aspects of the present disclosure, the turbine controller 202 can control an operating condition of the wind turbine 100 based on operating limits determined for various electrical and/or mechanical components (e.g. cables, transformers, switches, breakers, buses, connectors, etc.) of the wind turbine 100. For instance, one or more of the converter controller 262 and the turbine controller 202 can determine an operating limit for the wind turbine 100 based on operating limits determined for each of one or more components of the wind turbine. In one embodiment, the converter controller 262 can determine the operating limit for the wind turbine 100 and communicate the operating limit to the turbine controller 202. The turbine controller 202 can adjust an operating condition of the wind turbine to stay within the operating limit for the wind turbine. For instance, the turbine controller 202 can be configured to perform one or more of adjusting a power output of the generator 118 of the wind turbine 100, adjusting a torque of the generator 118 of the wind turbine 100, or adjusting a rotational speed of the rotor 106 of the wind turbine 100 to stay within the operating limit (e.g. a speed limit or power limit) for the wind turbine 100.

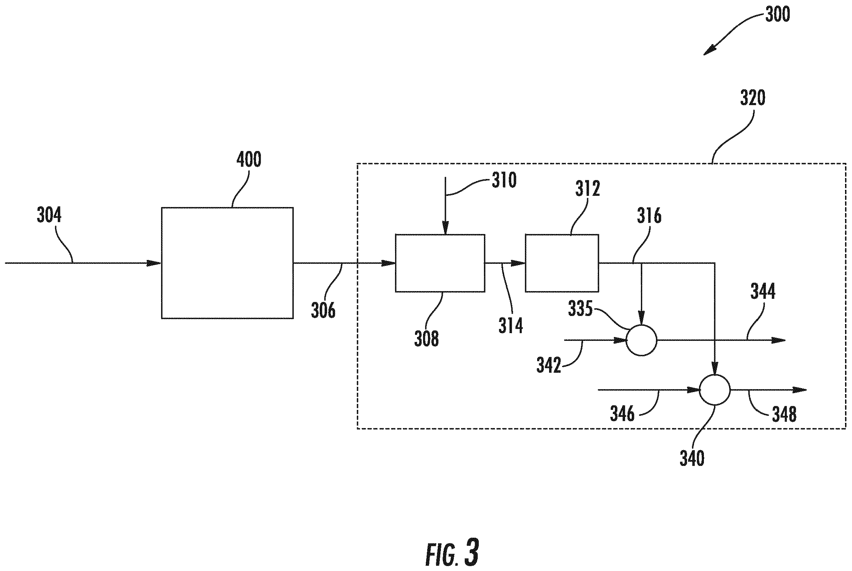

FIG. 3 depicts an example power limiting control scheme 300 that can be implemented by one or more control devices (e.g. one or more of turbine controller 202, converter controller 262, etc.) according to example embodiments of the present disclosure. The control scheme 300 can compute operational limits for a wind turbine (e.g. a power limit or a rotational speed limit) based on operational limits for one or more components of the wind turbine identified using a de-rating scheme. The control scheme 300 can be implemented by one or more control devices, such as the turbine controller 202 of FIG. 2 or other suitable control device(s).

The control scheme 300 can include a de-rating module 400 and a power limit module 320. The de-rating module 400 can be configured to determine an operating limit for one or more components of the wind turbine based at least in part on data indicative of one or more environmental conditions (e.g. a measured environmental condition) or operational conditions. The power limit module 320 can be configured to control operation of the wind turbine based at least in part on the operating limit determined for the at least one component of the wind turbine. For instance, the power limit module 320 can be configured to adjust an operating condition of the wind turbine determined based at least in part using the de-rating module 400.

As shown in FIG. 3, the de-rating module 400 can receive data indicative of one or more environmental conditions or operational conditions 304. The data indicative of environmental conditions or operational conditions 304 can be data indicative of one or more of a measured temperature, a measured altitude, a measured air density, a measured wind speed, generator speed and/or any suitable condition at or near the wind turbine. The de-rating module 400 uses the data indicative of the one or more environmental conditions 304 to determine operating limits for one or more components of the wind turbine.

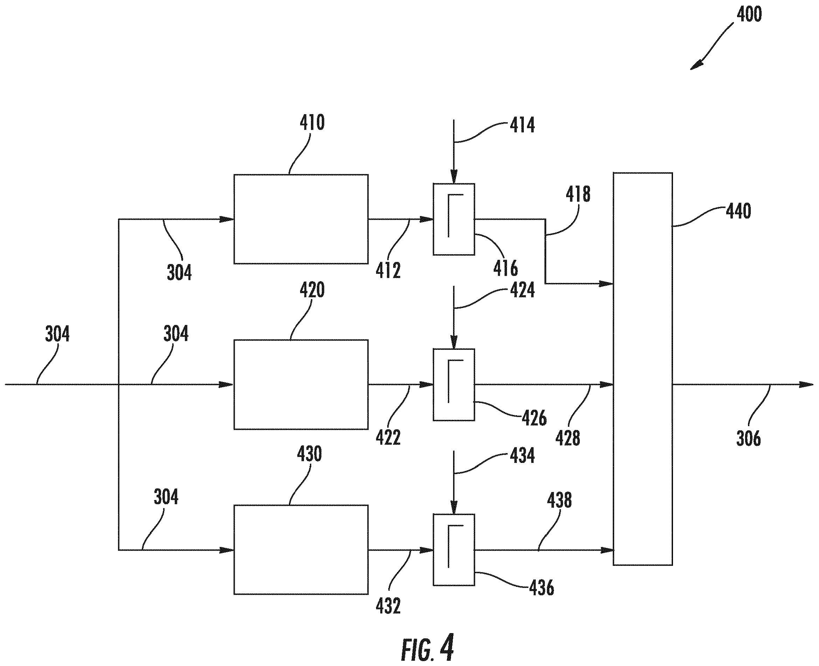

FIG. 4 depicts details of an example de-rating module 400 according to example embodiments of the present disclosure. In example embodiments, de-rating module 400 can implement a de-rating scheme for one or more components of the wind turbine. In the example of FIG. 4, de-rating module 400 implements a de-rating scheme for three components of a wind turbine, such as a stator cable, rotor cable, line cable for the wind turbine. Those of ordinary skill in the art, using the disclosures provided herein, will understand that the de-rating module 400 can implement a de-rating scheme for more or fewer components of the wind turbine without deviating from the scope of the present disclosure.

The de-rating module 400 includes de-rating curves 410, 420, and 430, one for each component de-rated by the de-rating module. Each de-rating curve 410, 420, and 430 can be configured to calculate an operating limit for its associated component based at least in part on the data indicative of one or more environmental conditions 304. For example, de-rating curve 410 can compute an operating limit 412 (e.g. a maximum electrical current) of a rotor cable as a function of one or more of altitude and temperature. De-rating curve 420 can compute an operating limit 422 (e.g. a maximum electrical current) of a rotor as a function of one or more of altitude and temperature. De-rating curve 430 can compute an operating limit 434 (e.g. a maximum electrical current) of a converter as a function of one or more of altitude and temperature. In one embodiment, each de-rating curve 410, 420, or 430 can correspond to a look up table, predefined equation, or other suitable method to compute an operating limit as a function of the data indicative of one or more environmental conditions and/or operational conditions 304.

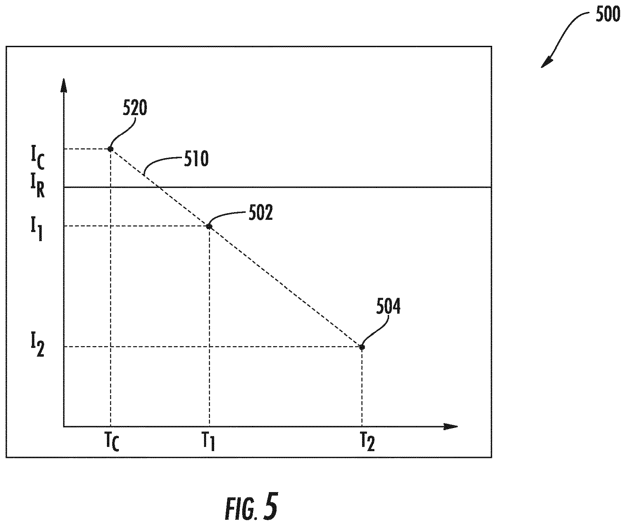

FIG. 5 depicts one example de-rating curve 500 that can be used to compute an operating limit as a function of one or more environmental conditions. The de-rating curve 500 can be based on data provided, for instance, by the manufacturer, specifying one or more known operating limits as a function of known environmental conditions. For instance, de-rating curve 500 can include data point 502 specifying an operating limit of I₁ as a function of a known temperature and/or altitude T₁. De-rating curve 500 further can include data point 504 specifying an operating limit of I₂ as a function of known temperature and/or altitude T₂.

De-rating curve 500 can be used to compute a current operating limit I_{C} based on data indicative of current environmental conditions T_{C} by interpolating data points 502 and 504 (e.g. using linear interpolation) along interpolation line 510 to identify data point 520 corresponding to the current environmental conditions T_{C}. Other interpolation methods can be used without deviating from the scope of the present disclosure.

As demonstrated in FIG. 5, in some cases, the de-rating curve 500 can provide an operating limit I_{C} that is greater than a maximum operating limit I_{R} for the component as specified, for instance, in data provided by the manufacturer of the component. To address this issue, example embodiments of the present disclosure can be configured to clamp the operating limits computed by the de-rating module 400 based at least in part on the maximum operating limits specified for the various components.

For example, FIG. 4 illustrates clampers 416, 426, and 436 used in conjunction with de-rating curves 410, 420, and 430 respectively. Clamper 416 can limit the initial operating limit 412 computed using de-rating curve 410 based on a signal 414 indicative of a maximum operating limit for the component associated with de-rating curve 410. For instance, clamper 416 can limit the initial operating limit 412 to provide an adjusted operating limit 418 that is no greater than the maximum operating limit 414. Similarly, clamper 426 can limit the initial operating limit 422 computed using de-rating curve 420 based on a signal 424 indicative of a maximum operating limit for the component associated with the de-rating curve 420. For instance, clamper 426 can limit the initial operating limit 422 to provide an adjusted operating limit 428 that is no greater than the maximum operating limit 424. Similarly, clamper 436 can limit the initial operating limit 432 computed using de-rating curve 430 based on signal 434 indicative of a maximum operating limit for the component associated with de-rating curve 430. For instance, clamper 436 can limit the initial operating limit 432 to provide an adjusted operating limit 438 that is no greater than the maximum operating limit 434.

The adjusted operating limits 418, 428, and 438 can be provided to limiter module 440. Limiter module 440 can be configured to compare the adjusted operating limits 418, 428, and 438 and can determine an operating limit 306 for the wind turbine. The operating limit 306 can be determined based at least in part on the most limited condition of the adjusted operating limits 418, 428, and 438. For instance, the operating limit 306 can be determined so that the operation of the wind turbine does not exceed the operating limit of any of the components of the wind turbine for the current environmental conditions.

Referring back to FIG. 3, the operating limit 306 can be provided to a limit selector 308. Limit selector 308 can receive an enable signal 310. Enable signal 310 can indicate whether the wind turbine is configured to dynamically change the operating limit. For example, when the enable signal 310 is true, the operating limit 306 can be provided by the limit selector 308 as the power operating limit 314. When the enable signal 310 is false, the limit selector 306 can provide a default operating limit, such as a rated operating limit for the wind turbine, as the operating limit 314.

The operating limit 314 can be provided to a filter 312, such as a low pass filter. The filter 312 can facilitate determining a steady state power operating limit 316 for the wind turbine. For instance, the filter 312 can be a low pass filter with a time constant of about 20 seconds. Other filters can be used without deviating from the scope of the present disclosure. Filter 312 can be used to filter out rapid fluctuations in power operating limit 314 to reduce the effect of transient conditions.

An operating condition of the wind turbine can be controlled based at least in part on the operating limit 316. For example, in one embodiment, operating limit 316 can be provided by filter 312 to one or more of multiplier 335 and multiplier 340. Multiplier 335 can multiply the operating limit 316 by a speed reference value 342 to obtain a turbine speed limit 344. Multiplier 340 can multiply the operating limit 316 by a power reference value to obtain a turbine power limit 348. In example embodiments, one or more operating conditions of the wind turbine can be adjusted based on the turbine speed limit 344 and/or the turbine power limit 348. For instance, one or more of a power output of the generator, torque of the generator, and/or rotational speed of the rotor can be adjusted based at least in part on the turbine speed limit 344 and/or the turbine power limit 348.

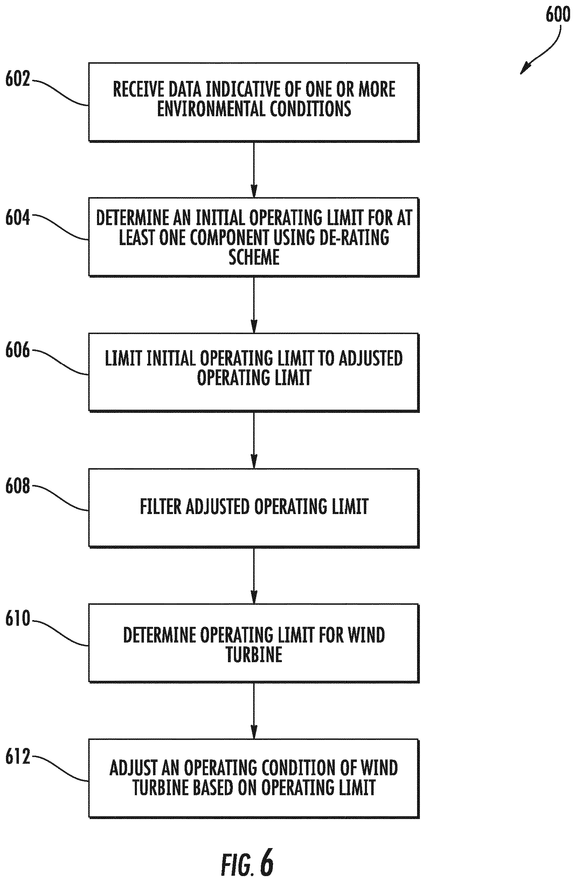

FIG. 6 depicts a flow diagram of an example control method (600) according to example embodiments of the present disclosure. The method (600) can be implemented by one or more control devices, such as the converter controller 262, turbine controller 202 or other suitable controller(s) (e.g. farm controller, etc.). In addition, FIG. 6 depicts steps performed in a particular order for purposes of illustration and discussion, those of ordinary skill in the art, using the disclosures provided herein, will understand that various steps of any of the methods discussed herein can be adapted, modified, rearranged, omitted, or expanded in various ways without deviating from the scope of the present disclosure.

At (602), the method can include receiving data indicative of one or more environmental conditions and/or operational conditions. In one embodiment, the data can be indicative of one or more of temperature, altitude, air density, wind speed, or other suitable environmental condition. The operational conditions can include data indicative of operation of the turbine, such as turbine speed.

At (604), an initial operating limit for at least one component can be determined using a de-rating scheme. The component can be any suitable component of the wind turbine, such as a cable, transformer, limit switch, bus, connector, etc. The initial operating limit can be an electrical or mechanical operating limit. For example, the operating limit can be an electrical current limit for the component.

In one embodiment, the initial operating limit can be determined by accessing a de-rating curve for the component. The de-rating curve can specify a plurality of operating limits as a function of a plurality of known environmental conditions. The initial operating condition can be determined by interpolating the de-rating curve using, for instance, linear interpolation, based at least in part on the data indicative of the one or more environmental conditions. In some cases, the initial operating limit can be greater than a rated operating limit, such as a maximum rated value of an operating parameter for the component of the wind turbine.

At (606), the method can include limiting the initial operating limit to an adjusted operating limit based at least in part on the rated operating limit for the at least one component. For instance, during implementation of the de-rating scheme, the initial operating limit can be limited to the adjusted operating limit. In one embodiment, the adjusted operating limit is no greater than the rated operating limit for the at least one component. In another example, a margin can be provided so that that the adjusted operating limit is no greater than 80% of the rated operating limit, such as no greater than 90% of the rated operating limit, such as no greater than 95% of the rated operating limit, such as not greater than 98% of the rated operating limit, or other percentage of the rated operating limit.

At (608), the method can include filtering the adjusted operating limit using, for instance, a low pass filter. In one embodiment, filtering the adjusted operating limit occurs subsequent to limiting the initial operating limit to the adjusted operating limit. Filtering the adjusted operating limit can be used to filter rapid fluctuations in the adjusted operating limit.

The method can include controlling operation of the wind turbine based at least in part on the adjusted operating limit. For example, in one embodiment, the method can include determining an operating limit for the wind turbine based at least in part on the adjusted operating limit for the component (610). The method can further include adjusting an operating condition of the wind turbine based at least in part on the operating limit for the wind turbine. For instance, in one embodiment, adjusting the operating limit can include one or more of adjusting a power output of a generator of the wind turbine, adjusting a torque of a generator of the wind turbine, or adjusting a rotational speed of a rotor of the wind turbine.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the appended claims.

## Claims

1. A method (600) for controlling a wind turbine (100), the method comprising:
receiving (602), by one or more control devices (320), data indicative of one or more environmental conditions or operating conditions;
determining (604), by the one or more control devices (320), an initial operating limit (412) for at least one component of the wind turbine (100) based at least in part on the one or more environmental conditions or operating conditions using a de-rating curve (410) for the at least one component, the initial operating limit (412) being greater than a rated operating limit (424) for the at least one component;
during implementation of a control scheme (300), using a clamper (416) to limit (606) the initial operating limit (412) to an adjusted operating limit (428) based at least in part on the rated operating limit (424); and
controlling (612), by the one or more control devices (320), operation of the wind turbine (100) based at least in part on the adjusted operating limit (428);
and **characterized in that** determining (604) the initial operating limit (412) comprises:
accessing, by the one or more control devices (320), the de-rating curve (410) for the component, the de-rating curve (410) specifying a plurality of operating limits as a function of a plurality of known environmental conditions; and
interpolating, by the one or more control devices (320), the derating curve (410) to determine the initial operating condition based at least in part on the data indicative of one or more environmental conditions.

2. The method (600) of claim 1, wherein the rated operating limit (424) of the component is a maximum rated value of an operating parameter for the component of the wind turbine (100).

3. The method (600) of any preceding claim, wherein the adjusted operating limit (428) is no greater than the rated operating limit (424).

4. The method (600) of any preceding claim, wherein subsequent to limiting the initial operating limit to an adjusted operating limit (428), the method (600) comprises filtering the adjusted operating limit (428) using a low pass filter.

5. The method (600) of any preceding claim, wherein controlling, by the one or more control devices (320), operation of the wind turbine (100) based at least in part on the adjusted operating limit comprises:
determining, by the one or more control devices (320), an operating limit for the wind turbine (100) based at least in part on the adjusted operating limit (428) for the component; and
adjusting, by the one or more control devices (320), an operating condition of the wind turbine (100) based at least in part on the operating limit (424) for the wind turbine (100).

6. The method (600) of claim 5, wherein adjusting an operating condition of the wind turbine (100) based at least on part on the operating limit (424) for the wind turbine (100) comprises one or more of adjusting a power output of a generator (118) of the wind turbine (100), adjusting a torque of the generator (118) of the wind turbine (100), or adjusting a rotational speed of a rotor (106) of the wind turbine (100).

7. The method (600) of any preceding claim, wherein the one or more environmental conditions or operating conditions comprise one or more of temperature, altitude, air density, wind speed, or generator (118) speed.

8. The method (600) of any preceding claim, wherein the initial operating limit (412) and the adjusted operating limit (428) are an electrical current limit for the component.

9. A control system (400) for a wind turbine (100), the control system comprising:
a de-rating module (410) implemented by one or more control devices (320), the de-rating module configured to determine an initial operating limit (412) for at least one component of the wind turbine (100) based at least in part on data indicative of one or more environmental conditions;
a power limit module (420) implemented by the one or more control devices (320), the power limit control module (420) configured to control operation of the wind turbine (100) based at least in part on an adjusted operating limit (428) for the at least one component of the wind turbine (100);
wherein the de-rating module (410) comprises a clamper (416) implemented by the one or more control devices (320), the clamper (416) configured to adjust the operating limit from the initial operating limit (412) to the adjusted operating limit (428) based at least part on a de-rating curve (410) for the at least one component when the initial operating limit (412) is greater than a rated operating limit (424) for the at least one component;
and **characterized in that** the de-rating module (410) is configured to determine the initial operating limit (412) by interpolating the de-rating curve (410) specifying operating limits as a function of a plurality of known environmental conditions.

10. The control system (400) of claim 9, wherein the rated operating limit (424) of the component is a highest rated value of an operating parameter for the component of the wind turbine (100).

11. The control system (400) of claim 9 or claim 10, wherein the adjusted operating limit (428) is no greater than the rated operating limit.

12. The control system (400) of any of claims 9 to 11, wherein the power limit module (420) is configured to control operation of the wind turbine (100) by determining an operating limit (428) for the wind turbine based at least in part on the adjusted operating limit for the component and adjusting an operating condition of the wind turbine (100) based at least in part on the operating limit for the wind turbine (100).

13. The control system (400) of any of claims 9 to 12, further comprising a filter (312) implemented by the one or more control devices (320), the filter (312) configured to reduce a fluctuation of the operating limit.

## Patentansprüche

1. Verfahren (600) zum Steuern einer Windturbine (100), wobei das Verfahren umfasst:
Empfangen (602), durch eine oder mehrere Steuervorrichtungen (320), von Daten, die eine oder mehrere Umgebungsbedingungen oder Betriebsbedingungen anzeigen;
Bestimmen (604), durch die eine oder die mehreren Steuervorrichtungen (320), einer anfänglichen Betriebsgrenze (412) für mindestens eine Komponente der Windturbine (100) mindestens teilweise basierend auf der einen oder den mehreren Umgebungsbedingungen oder Betriebsbedingungen unter Verwendung einer Drosselungskurve (410) für die mindestens eine Komponente, wobei die anfängliche Betriebsgrenze (412) größer als eine Nennbetriebsgrenze (424) für die mindestens eine Komponente ist;
während der Implementierung eines Steuerschemas (300), Verwenden einer Klemmeinrichtung (416) zum Begrenzen (606) der anfänglichen Betriebsgrenze (412) auf eine angepasste Betriebsgrenze (428) mindestens teilweise basierend auf der Nennbetriebsgrenze (424); und
Steuern (612), durch die eine oder die mehreren Steuervorrichtungen (320), des Betriebs der Windturbine (100) mindestens teilweise basierend auf der angepassten Betriebsgrenze (428);
und **dadurch gekennzeichnet, dass** das Bestimmen (604) der anfänglichen Betriebsgrenze (412) umfasst:
Zugreifen, durch die eine oder die mehreren Steuervorrichtungen (320), auf die Drosselungskurve (410) für die Komponente, wobei die Drosselungskurve (410) eine Vielzahl von Betriebsgrenzen in Abhängigkeit von einer Vielzahl von bekannten Umgebungsbedingungen spezifiziert; und
Interpolieren, durch die eine oder die mehreren Steuervorrichtungen (320), der Drosselungskurve (410) zum Bestimmen der anfänglichen Betriebsbedingung mindestens teilweise basierend auf den Daten, die eine oder mehrere Umgebungsbedingungen anzeigen.

2. Verfahren (600) nach Anspruch 1, wobei die Nennbetriebsgrenze (424) der Komponente ein maximaler Nennwert eines Betriebsparameters für die Komponente der Windturbine (100) ist.

3. Verfahren (600) nach einem der vorstehenden Ansprüche, wobei die angepasste Betriebsgrenze (428) nicht größer als die Nennbetriebsgrenze (424) ist.

4. Verfahren (600) nach einem der vorstehenden Ansprüche, wobei nach dem Begrenzen der anfänglichen Betriebsgrenze auf eine angepasste Betriebsgrenze (428) das Verfahren (600) das Filtern der angepassten Betriebsgrenze (428) unter Verwendung eines Tiefpassfilters umfasst.

5. Verfahren (600) nach einem der vorstehenden Ansprüche, wobei das Steuern, durch die eine oder die mehreren Steuervorrichtungen (320), des Betriebs der Windturbine (100) mindestens teilweise basierend auf der angepassten Betriebsgrenze umfasst:
Bestimmen, durch die eine oder die mehreren Steuervorrichtungen (320), einer Betriebsgrenze für die Windturbine (100) mindestens teilweise basierend auf der angepassten Betriebsgrenze (428) für die Komponente; und
Anpassen, durch die eine oder die mehreren Steuervorrichtungen (320), einer Betriebsbedingung der Windturbine (100) mindestens teilweise basierend auf der Betriebsgrenze (424) für die Windturbine (100).

6. Verfahren (600) nach Anspruch 5, wobei das Anpassen einer Betriebsbedingung der Windturbine (100) mindestens teilweise basierend auf der Betriebsgrenze (424) für die Windturbine (100) eines oder mehrere von dem Anpassen eines Leistungsausgangs eines Generators (118) der Windturbine (100), dem Anpassen eines Drehmoments des Generators (118) der Windturbine (100) oder dem Anpassen einer Drehzahl eines Rotors (106) der Windturbine (100) umfasst.

7. Verfahren (600) nach einem der vorstehenden Ansprüche, wobei die eine oder die mehreren Umgebungsbedingungen oder Betriebsbedingungen eines oder mehrere von Temperatur, Höhe, Luftdichte, Windgeschwindigkeit oder Geschwindigkeit des Generators (118) umfassen.

8. Verfahren (600) nach einem der vorstehenden Ansprüche, wobei die anfängliche Betriebsgrenze (412) und die angepasste Betriebsgrenze (428) eine elektrische Stromgrenze für die Komponente sind.

9. Steuersystem (400) für eine Windturbine (100), wobei das Steuersystem umfasst:
ein Drosselungsmodul (410), das durch eine oder mehrere Steuervorrichtungen (320) implementiert ist, wobei das Drosselungsmodul konfiguriert ist zum Bestimmen einer anfängliche Betriebsgrenze (412) für mindestens eine Komponente der Windturbine (100) mindestens teilweise basierend auf Daten, die eine oder mehrere Umgebungsbedingungen anzeigen;
ein Leistungsbegrenzungsmodul (420), das durch die eine oder die mehreren Steuervorrichtungen (320) implementiert ist, wobei das Leistungsbegrenzungssteuermodul (420) konfiguriert ist zum Steuern des Betriebs der Windturbine (100) mindestens teilweise basierend auf einer angepassten Betriebsgrenze (428) für die mindestens eine Komponente der Windturbine (100);
wobei das Drosselungsmodul (410) eine Klemmeinrichtung (416) umfasst, die durch die eine oder die mehreren Steuervorrichtungen (320) implementiert ist, wobei die Klemmeinrichtung (416) konfiguriert ist zum Anpassen der Betriebsgrenze von der anfänglichen Betriebsgrenze (412) an die angepasste Betriebsgrenze (428) mindestens teilweise basierend auf einer Drosselungskurve (410) für die mindestens eine Komponente, wenn die anfängliche Betriebsgrenze (412) größer als eine Nennbetriebsgrenze (424) für die mindestens eine Komponente ist;
und **dadurch gekennzeichnet, dass** das Drosselungsmodul (410) konfiguriert ist zum Bestimmen der anfänglichen Betriebsgrenze (412) durch Interpolieren der Drosselungskurve (410), die Betriebsgrenzen in Abhängigkeit von einer Vielzahl von bekannten Umgebungsbedingungen spezifiziert.

10. Steuersystem (400) nach Anspruch 9, wobei die Nennbetriebsgrenze (424) der Komponente ein höchster Nennwert eines Betriebsparameters für die Komponente der Windturbine (100) ist.

11. Steuersystem (400) nach Anspruch 9 oder Anspruch 10, wobei die angepasste Betriebsgrenze (428) nicht größer als die Nennbetriebsgrenze ist.

12. Steuersystem (400) nach einem der Ansprüche 9 bis 11, wobei das Leistungsbegrenzungsmodul (420) konfiguriert ist zum Steuern des Betriebs der Windturbine (100) durch Bestimmen einer Betriebsgrenze (428) für die Windturbine mindestens teilweise basierend auf der angepassten Betriebsgrenze für die Komponente und Anpassen einer Betriebsbedingung der Windturbine (100) mindestens teilweise basierend auf der Betriebsgrenze für die Windturbine (100).

13. Steuersystem (400) nach einem der Ansprüche 9 bis 12, ferner umfassend einen Filter (312), der durch die eine oder die mehreren Steuervorrichtungen (320) implementiert ist, wobei der Filter (312) konfiguriert ist zum Reduzieren einer Schwankung der Betriebsgrenze.

## Revendications

1. Procédé (600) pour commander une turbine éolienne (100), le procédé comprenant :
la réception (602), par un ou plusieurs dispositifs de commande (320), de données indicatives d'une ou plusieurs conditions environnementales ou conditions de fonctionnement ;
la détermination (604), par le ou les dispositifs de commande (320), d'une limite de fonctionnement initiale (412) pour au moins un composant de la turbine éolienne (100) sur la base au moins en partie des une ou plusieurs conditions environnementales ou conditions de fonctionnement en utilisant une courbe de dépréciation (410) pour l'au moins un composant, la limite de fonctionnement initiale (412) étant supérieure à une limite de fonctionnement nominale (424) pour l'au moins un composant ;
pendant la mise en oeuvre d'un schéma de commande (300), l'utilisation d'un dispositif de serrage (416) pour limiter (606) la limite de fonctionnement initiale (412) à une limite de fonctionnement ajustée (428) sur la base au moins en partie de la limite de fonctionnement nominale (424) ; et
la commande (612), par le ou les dispositifs de commande (320), du fonctionnement de la turbine éolienne (100) sur la base au moins en partie de la limite de fonctionnement ajustée (428) ;
et **caractérisé en ce que** la détermination (604) de la limite de fonctionnement initiale (412) comprend :
l'accession, par le ou les dispositifs de commande (320), à la courbe de dépréciation (410) pour le composant, la courbe de dépréciation (410) spécifiant une pluralité de limites de fonctionnement en fonction d'une pluralité de conditions environnementales connues ; et
l'interpolation, par le ou les dispositifs de commande (320), de la courbe de dépréciation (410) pour déterminer la condition de fonctionnement initiale en se basant au moins en partie sur les données indicatives d'une ou plusieurs conditions environnementales.

2. Procédé (600) selon la revendication 1, dans lequel la limite de fonctionnement nominale (424) du composant est une valeur nominale maximale d'un paramètre de fonctionnement pour le composant de la turbine éolienne (100).

3. Procédé (600) selon une quelconque revendication précédente, dans lequel la limite de fonctionnement ajustée (428) n'est pas supérieure à la limite de fonctionnement nominale (424).

4. Procédé (600) selon une quelconque revendication précédente, dans lequel, à la suite de la limitation de la limite de fonctionnement initiale à une limite de fonctionnement ajustée (428), le procédé (600) comprend le filtrage de la limite de fonctionnement ajustée (428) en utilisant un filtre passe-bas.

5. Procédé (600) selon une quelconque revendication précédente, dans lequel la commande, par le ou les dispositifs de commande (320), du fonctionnement de la turbine éolienne (100) sur la base au moins en partie de la limite de fonctionnement ajustée comprend :
la détermination, par le ou les dispositifs de commande (320), d'une limite de fonctionnement pour la turbine éolienne (100) sur la base au moins en partie de la limite de fonctionnement ajustée (428) pour le composant ; et
l'ajustement, par le ou les dispositifs de commande (320), d'un état de fonctionnement de la turbine éolienne (100) sur la base au moins en partie de la limite de fonctionnement (424) pour la turbine éolienne (100).

6. Procédé (600) selon la revendication 5, dans lequel l'ajustement d'une condition de fonctionnement de la turbine éolienne (100) sur la base au moins en partie de la limite de fonctionnement (424) pour la turbine éolienne (100) comprend un ou plusieurs de l'ajustement d'une puissance de sortie d'un générateur (118) de la turbine éolienne (100), l'ajustement d'un couple du générateur (118) de la turbine éolienne (100), ou l'ajustement d'une vitesse de rotation d'un rotor (106) de la turbine éolienne (100).

7. Procédé (600) selon une quelconque revendication précédente, dans lequel la ou les conditions environnementales ou conditions de fonctionnement comprennent une ou plusieurs de la température, de l'altitude, de la densité d'air, de la vitesse du vent ou de la vitesse du générateur (118).

8. Procédé (600) selon une quelconque revendication précédente, dans lequel la limite de fonctionnement initiale (412) et la limite de fonctionnement ajustée (428) représentent une limite de courant électrique pour le composant.

9. Système de commande (400) pour une turbine éolienne (100), le système de commande comprenant :
un module de dépréciation (410) mis en oeuvre par un ou plusieurs dispositifs de commande (320), le module de dépréciation configuré pour déterminer une limite de fonctionnement initiale (412) pour au moins un composant de la turbine éolienne (100) sur la base au moins en partie de données indicatives d'une ou plusieurs conditions environnementales ;
un module de limitation de puissance (420) mis en oeuvre par le ou les dispositifs de commande (320), le module de commande de limite de puissance (420) configuré pour commander le fonctionnement de la turbine éolienne (100) sur la base au moins en partie d'une limite de fonctionnement ajustée (428) pour l'au moins un composant de la turbine éolienne (100) ;
dans lequel le module de dépréciation (410) comprend un dispositif de serrage (416) mis en œuvre par le ou les dispositifs de commande (320), le dispositif de serrage (416) configuré pour ajuster la limite de fonctionnement de la limite de fonctionnement initiale (412) à la limite de fonctionnement ajustée (428) sur la base au moins en partie d'une courbe de dépréciation (410) pour l'au moins un composant lorsque la limite de fonctionnement initiale (412) est supérieure à une limite de fonctionnement nominale (424) pour l'au moins un composant ;
et **caractérisé en ce que** le module de dépréciation (410) est configuré pour déterminer la limite de fonctionnement initiale (412) en interpolant la courbe de dépréciation (410) spécifiant des limites de fonctionnement en fonction d'une pluralité de conditions environnementales connues.

10. Système de commande (400) selon la revendication 9, dans lequel la limite de fonctionnement nominale (424) du composant est une valeur nominale la plus élevée d'un paramètre de fonctionnement pour le composant de la turbine éolienne (100).

11. Système de commande (400) selon la revendication 9 ou la revendication 10, dans lequel la limite de fonctionnement ajustée (428) n'est pas supérieure à la limite de fonctionnement nominale.

12. Système de commande (400) selon l'une quelconque des revendications 9 à 11, dans lequel le module de limitation de puissance (420) est configuré pour commander le fonctionnement de la turbine éolienne (100) en déterminant une limite de fonctionnement (428) pour la turbine éolienne sur la base au moins en partie de la limite de fonctionnement ajustée pour le composant et en ajustant une condition de fonctionnement de la turbine éolienne (100) sur la base au moins en partie de la limite de fonctionnement pour la turbine éolienne (100).

13. Système de commande (400) selon l'une quelconque des revendications 9 à 12, comprenant en outre un filtre (312) mis en œuvre par le ou les dispositifs de commande (320), le filtre (312) configuré pour réduire une fluctuation de la limite de fonctionnement.
